(19) Europäisches Patentamt
European Patent Office
Office européen des brevets

(11) **EP 3 089 895 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **15703021.4**

(22) Anmeldetag: **28.01.2015**

(51) Int Cl.:
*B60T 8/26* *(2006.01)*       *B60T 17/22* *(2006.01)*
*B60T 13/66* *(2006.01)*       *B60T 8/32* *(2006.01)*

(86) Internationale Anmeldenummer:
**PCT/EP2015/051689**

(87) Internationale Veröffentlichungsnummer:
**WO 2015/128147 (03.09.2015 Gazette 2015/35)**

(54) **VERFAHREN UND STEUERGERÄT ZUM BETRIEB EINES FAHRZEUGS, INSBESONDERE EINES SCHIENENFAHRZEUGS.**

METHOD AND CONTROL UNIT FOR THE CONTROL OF A VEHICLE, IN PARTICULAR OF A RAIL VEHICLE

PROCÉDÉ ET UNITE DE COMMANDE POUR CONTROLER UN VÉHICULE, EN PARTICULIER UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2014 DE 102014203751**

(43) Veröffentlichungstag der Anmeldung:
**09.11.2016 Patentblatt 2016/45**

(73) Patentinhaber: **Siemens Mobility GmbH
81739 München (DE)**

(72) Erfinder: **HORN, Stephan
91056 Erlangen (DE)**

(56) Entgegenhaltungen:
EP-A1- 1 387 153          WO-A1-2004/033266
WO-A2-2013/135393         DE-A1- 4 302 925
DE-A1- 10 233 845         DE-A1- 19 510 755
DE-A1-102007 024 310      DE-A1-102011 052 545
DE-A1-102012 203 132      DE-B3-102011 013 022
DE-C1- 4 446 358          FR-A1- 2 981 033

**Beschreibung**

Die Erfindung bezieht sich auf ein Verfahren zum Betreiben eines Fahrzeugs, insbesondere eines Schienenfahrzeugs, wobei bei dem Verfahren ein das Bremsvermögen der Bremsen des Fahrzeugs angebender Bremsvermögenswert ermittelt wird.

Die deutsche Offenlegungsschrift DE 102 33 845 A1 offenbart ein gattungsgemäßes Verfahren in Form eines Diagnose- und Überwachungsverfahrens für Fahrzeuge, insbesondere Schienenfahrzeuge. Durch das Erfassen von Fehlerdaten und/oder Betriebs- und Zustandsdaten soll die Wartung und Reparatur der Fahrzeuge vereinfacht werden.

Die internationale Patentanmeldung WO 2004/033266 A1 beschreibt ein Verfahren zum Steuern einer Bremsvorrichtung, das fahrerseitige Bedienhandlungen beim Fahren auf geneigten Fahrbahnen, beispielsweise beim Einparken oder Rangieren am Berg, vereinfachen soll. Das Verfahren ermittelt die zum Halten des Fahrzeugs auf einer geneigten Fahrbahn nötige Bremskraft in Abhängigkeit von der Neigung und in Abhängigkeit vom Fahrzeuggewicht.

Die deutsche Offenlegungsschrift DE 10 2007 024 310 A1 offenbart ein einfaches und kostengünstiges Verfahren zur Beurteilung der Kompatibilität von Bremsanlagen eines Zugfahrzeugs und eines vom Zugfahrzeug gezogenen Anhängefahrzeugs. Im Rahmen des Verfahrens wird die jeweils aufgebrachte Bremsenergie beim Bremsvorgang des Anhängefahrzeugs sowie die benötigte Bremsenergie ermittelt. Anhand der Bremsenergiewerte wird die Kompatibilität der Bremsanlagen bestimmt.

Die europäische Patentanmeldung EP 1 387 153 A1 offenbart ein Verfahren zur Ermittlung der Fahrzeugmasse eines Fahrzeugs. Unter anderem werden im Rahmen des Verfahrens Beschleunigungswerte und Fahrbahnneigungswerte ermittelt und zur Bestimmung der Fahrzeugmasse herangezogen.

Die deutsche Patentschrift DE 102006 011 963 B3 offenbart ein Verfahren zum Bremsen eines Schienenfahrzeugs, bei dem vorgesehen ist, dass die abzubremsende Masse des Schienenfahrzeugs und für jedes Bremssystem die momentan bereitstehenden Bremskräfte (Kannkräfte) ermittelt werden und bei dem auch die momentan erforderliche Bremskraft (Sollkraft) ermittelt wird. Dabei wird dann die Sollkraft unter Berücksichtigung der abzubremsenden Masse und der Kannkräfte durch eine Managerfunktion auf die Bremssysteme verteilt.

Die Berechnung des Bremsvermögenswerts wird bei Schienenfahrzeugen, insbesondere Eisenbahnzügen, üblicherweise auf der Basis von Parametern durchgeführt, die den schlimmsten zu erwartenden Betriebszustand des Fahrzeugs darstellen, um stets ausreichend Sicherheitsreserven garantieren zu können. Problematisch bei der vorbekannten Vorgehensweise ist, dass sich aus den berechneten Bremsvermögenswerten Betriebsrestriktionen ergeben können, die den wirtschaftlichen Betrieb der Fahrzeuge erschweren: Beispielsweise kann ein realitätsfern zu klein ermittelter Bremsvermögenswert eine Geschwindigkeitsbegrenzung auf bestimmten Streckenabschnitten erzwingen, die eigentlich gar nicht nötig wäre.

Der Erfindung liegt demgemäß die Aufgabe zugrunde, ein Verfahren zum Betreiben eines Fahrzeugs anzugeben, bei dem praxisnahe Bremsvermögenswerte ermittelt werden.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Ein wesentlicher Vorteil des erfindungsgemäßen Verfahrens ist darin zu sehen, dass durch die Heranziehung zweier Messwerte, nämlich des Ausfallzustandsmesswerts und mindestens eines weiteren Messwerts, der Bremsvermögenswert genauer und realitätsnäher als bei vorbekannten Verfahren bestimmt werden kann und unnötige Betriebsrestriktionen während des Fahrbetriebs vermieden werden können.

Als besonders vorteilhaft wird es angesehen, wenn die jeweilige Fahrzeugmasse gemessen und als weiterer Messwert ein Massemesswert ermittelt wird und der Bremsvermögenswert zumindest auch in Abhängigkeit von dem aktuellen Massemesswert bestimmt wird.

Vorzugsweise wird die Fahrzeugmasse während des Fahrbetriebs gemessen.

Besonders vorteilhaft ist es, wenn der Luftdruck in der Luftfederung des Fahrzeugs unter Bildung eines Luftdruckmesswerts gemessen wird und mit dem Luftdruckmesswert der Massemesswert gebildet wird.

Alternativ oder zusätzlich kann der Raddurchmesser eines oder mehrerer Räder des Fahrzeugs gemessen werden und als weiterer Messwert ein Raddurchmessermesswert ermittelt werden. Im Falle einer solchen Ausgestaltung wird der Bremsvermögenswert vorzugsweise zumindest auch in Abhängigkeit von dem Raddurchmessermesswert bestimmt.

Der Raddurchmesser wird bevorzugt im Rahmen einer Fahrzeugwartung oder Fahrzeuginspektion gemessen. In einem solchen Falle wird der Raddurchmessermesswert vorzugsweise in einem Speicher des Fahrzeugs, insbesondere einem Speicher eines Steuergeräts des Fahrzeugs, abgespeichert. Alternativ kann der Raddurchmesser während der Fahrt, sei es regelmäßig oder unregelmäßig, gemessen werden.

Alternativ oder zusätzlich kann der Gestängewirkungsgrad der Bremsen gemessen und als weiterer Messwert ein Gestängewirkungsgradmesswert gebildet werden. Bei dieser Ausgestaltung wird der Bremsvermögenswert vorzugsweise zumindest auch in Abhängigkeit von dem Gestängewirkungsgradmesswert bestimmt.

Der Gestängewirkungsgrad wird bevorzugt im Rahmen einer Fahrzeugwartung oder Fahrzeuginspektion gemessen. In einem solchen Falle wird der Gestängewirkungsgradmesswert vorzugsweise in einem Speicher des Fahrzeugs, insbesondere einem Speicher eines Steuergeräts des Fahrzeugs, abgespeichert. Alternativ kann der Gestängewirkungsgrad während der Fahrt, sei es regelmäßig oder unregelmäßig, gemessen werden.

Im Falle eines Bremsvorgangs erfolgt die Steuerung der Bremsen bevorzugt unter Berücksichtigung des berechneten Bremsvermögenswerts; insbesondere wird der Zeitpunkt der Auslösung einer Bremsanforderung bevorzugt unter Berücksichtigung des berechneten Bremsvermögenswertes ermittelt. Auch kann die Ermittelung der zulässigen Höchstgeschwindigkeit des Fahrzeugs

- abhängig vom jeweiligen Streckenabschnitt oder unabhängig vom jeweiligen Streckenabschnitt - unter Berücksichtigung des errechneten Bremsvermögenswerts erfolgen.

Bei einer besonders bevorzugten Ausgestaltung des Verfahrens ist vorgesehen, dass

- mit dem Ausfallzustandsmesswert zunächst ein vorläufiger Bremsvermögenswert ermittelt wird,
- mit dem vorläufigen Bremsvermögenswert ein vorläufiger Bremsweg ermittelt wird,
- der vorläufige Bremsvermögenswert mit dem weiteren Messwert oder mit einem der weiteren Messwerte unter Bildung eines korrigierten Bremswegs korrigiert wird und
- der das Bremsvermögen der Bremsen des Fahrzeugs angebende (endgültige) Bremsvermögenswert unter Heranziehung des korrigierten Bremswegs errechnet wird.

Der vorläufige Bremsvermögenswert wird vorzugsweise ermittelt gemäß

$$\lambda o = \frac{Gb}{M} \cdot 100$$

wobei $\lambda o$ den vorläufige Bremsvermögenswert, Gb den Ausfallzustandsmesswert und M den oben erwähnten Massemesswert bezeichnet.

Mit dem vorläufigen Bremsvermögenswert wird der vorläufige Bremsweg vorzugsweise ermittelt gemäß:

$$So = \frac{C}{\lambda o + D}$$

wobei C und D zwei fest vorgegebene Konstanten bezeichnen.

Der vorläufige Bremsvermögenswert So wird mit dem weiteren Messwert oder mit einem der weiteren Messwerte vorzugsweise unter Bildung eines korrigierten Bremswegs Sk korrigiert gemäß:

$$Sk = t \cdot V + \frac{Fo + Ff}{Fk + Ff} \cdot (So - V \cdot t)$$

wobei t die Ansprechzeit der Bremsen, Ff den Fahrwiderstand, V eine vorgegebene Ausgangsgeschwindigkeit und Fo die Bremskraft des Fahrzeuges unter den Bedingungen darstellt, die für den vorläufigen Bremsvermögenswert $\lambda o$ gelten (dies ist vorzugsweise die Bremskraft im Neuzustand des Fahrzeuges, wenn der vorläufige Bremsvermögenswert $\lambda o$ für den Neuzustand ermittelt wurde) und wobei Fk berechnet wird gemäß

$$Fk = Fo \cdot \frac{\eta k}{\eta o} \cdot \frac{do}{dk}$$

oder alternativ gemäß

$$Fk = Fo \cdot \frac{do}{dk}$$

wobei

- dk einen Raddurchmessermesswert, der den aktuellen Raddurchmesser der Räder des Fahrzeugs angibt,
- $\eta o$ den Gestängewirkungsgrad im schlechtesten zu erwartenden Betriebszustand des Fahrzeugs,
- $\eta k$ einen Gestängewirkungsgradmesswert, der den aktuellen Gestängewirkungsgrad des Fahrzeugs angibt, und
- do den Raddurchmesser der Räder unter den Bedingungen, die für die Bestimmung des vorläufigen Bremsvermögenswertes gelten (do gibt vorzugsweise den Raddurchmesser der Räder im Neuzustand der Räder an, wenn der vorläufige Bremsvermögenswert $\lambda o$ für den Neuzustand ermittelt wurde) bezeichnet.

Der das Bremsvermögen der Bremsen des Fahrzeugs angebende (endgültige) Bremsvermögenswert wird vorzugsweise unter Heranziehung des korrigierten Bremswegs Sk errechnet gemäß:

$$\lambda = \frac{C}{Sk} - D$$

Die Erfindung bezieht sich außerdem auf ein Steuergerät, insbesondere Bremssteuergerät, für ein Fahrzeug, insbesondere ein Schienenfahrzeug, wobei das Steuergerät geeignet ist, einen Bremsvermögenswert der Bremsen des Fahrzeugs zu ermitteln.

Erfindungsgemäß sind bezüglich des Steuergeräts die Merkmale gemäß Patentanspruch 11 vorgesehen.

Bezüglich der Vorteile des erfindungsgemäßen Steuergeräts wird auf die obigen Ausführungen im Zusammenhang mit dem erfindungsgemäßen Verfahren verwiesen, da die Vorteile des erfindungsgemäßen Verfahrens denen des erfindungsgemäßen Steuergeräts im Wesentlichen entsprechen.

Als vorteilhaft wird es angesehen, wenn das Steuergerät einen Speicher aufweist, in dem ein im Rahmen einer Fahrzeugwartung, Fahrzeuginspektion oder des normalen Fahrzeugbetriebs gemessener Raddurchmessermesswert und/oder ein im Rahmen einer Fahrzeugwartung, Fahrzeuginspektion oder des normalen Fahrzeugbetriebs gemessener Gestängewirkungsgradmesswert abgespeichert oder zumindest abspeicherbar ist, und das Steuergerät derart ausgestaltet ist, das es den Bremsvermögenswert zumindest auch in Abhängigkeit von dem gespeicherten Raddurchmessermesswert und/oder dem gespeicherten Gestängewirkungsgradmesswert bestimmt.

Bei einer besonders bevorzugten Ausgestaltung des Steuergeräts ist vorgesehen, dass das Steuergerät mit einer Fahrzeugmassebestimmungseinrichtung verbunden ist oder eine solche selbst umfasst, die die jeweilige Fahrzeugmasse messen und als weiteren Messwert einen Massemesswert ermitteln kann. Bei dieser Variante ist das Steuergerät vorzugsweise derart ausgestaltet, dass es den Bremsvermögenswert zumindest auch in Abhängigkeit von dem aktuellen Massemesswert bestimmt.

Besonders vorteilhaft ist es, wenn die Fahrzeugmassebestimmungseinrichtung den Luftdruck in der Luftfederung des Fahrzeugs misst und mit dem Luftdruckmesswert den Massemesswert bildet.

Die Erfindung wird nachfolgend anhand von Ausführungsbeispielen näher erläutert, dabei zeigen beispielhaft:

Figur 1    ein Ausführungsbeispiel für ein Schienenfahrzeug, das mit einem Bremssteuergerät ausgestattet ist, wobei das Bremssteuergerät einen aktuellen Bremsvermögenswert anhand zweier Messwerte errechnen kann,

Figur 2    die Arbeitsweise des Bremssteuergeräts gemäß Figur 1 beispielhaft näher im Detail,

Figur 3    ein Ausführungsbeispiel für ein Schienenfahrzeug, das mit einem Bremssteuergerät ausgestattet ist, das einen aktuellen Bremsvermögenswert anhand dreier Messwerte errechnen kann,

Figur 4    die Arbeitsweise des Bremssteuergeräts gemäß Figur 3 beispielhaft näher im Detail,

Figur 5    ein Ausführungsbeispiel für ein Schienenfahrzeug, das mit einem Bremssteuergerät ausgestattet ist, das einen aktuellen Bremsvermögenswert anhand von vier Messwerten errechnen kann, und

Figur 6    die Arbeitsweise des Bremssteuergeräts gemäß Figur 5 beispielhaft näher im Detail,

In den Figuren werden für identische oder vergleichbare Komponenten aus Gründen der Übersicht stets dieselben Bezugszeichen verwendet.

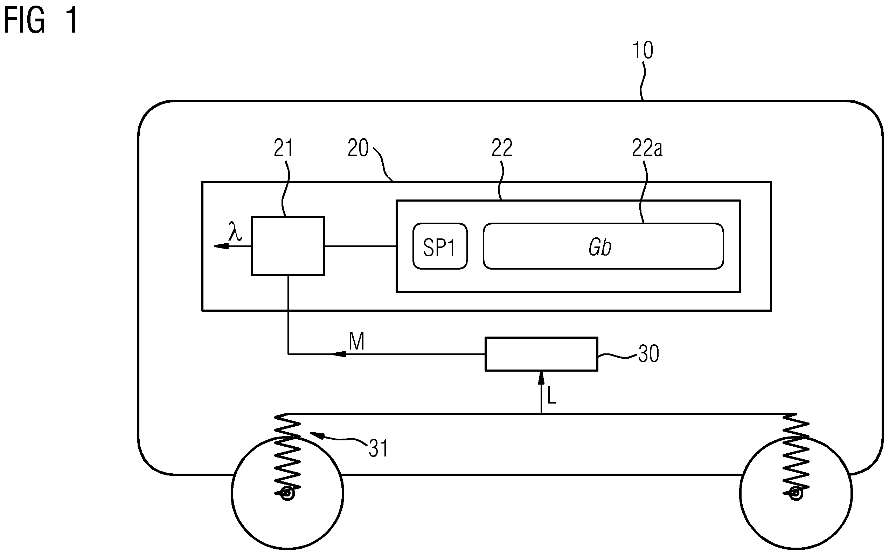

Die Figur 1 zeigt ein Ausführungsbeispiel für ein Schienenfahrzeug 10, das - wie beispielhaft in der Figur 1 gezeigt - eingliedrig, also nur durch einen einzigen Wagen gebildet sein kann. Alternativ kann das Schienenfahrzeug 10 auch mehrgliedrig sein, also mehrere Wagen umfassen und einen Zug bzw. einen Eisenbahnzug bilden.

Das Schienenfahrzeug 10 weist unter anderem ein Steuergerät, vorzugsweise in Form eines Bremssteuergeräts 20, und eine Fahrzeugmassebestimmungseinrichtung 30 auf.

Das Bremssteuergerät 20 umfasst eine Steuereinrichtung 21, vorzugsweise in Form einer Datenverarbeitungseinrichtung (z. B. Computer), und einen Speicher 22, in dem ein Softwareprogrammmodul SP1 und ein Ausfallzustandsmesswert Gb gespeichert sind. Der Ausfallzustandsmesswert Gb befindet sich in einem Datenspeicherabschnitt 22a des Speichers 20.

Bei dem Ausfallzustandsmesswert Gb handelt es sich vorzugsweise um einen Bremsgewichtsmesswert, der die Summe der Bremsgewichte der einsatzfähigen bzw. funktionsfähigen Bremsen des Schienenfahrzeugs 10 angibt. Der Ausfallzustandsmesswert Gb wird von dem Bremssteuergerät 20 regelmäßig oder unregelmäßig aktualisiert, vorzugsweise im Rahmen von Bremsproben, bei denen die einsatzfähigen bzw. funktionsfähigen Bremsen des Schienenfahrzeugs 10 ermittelt und deren einzelne Bremsgewichte unter Bildung des Bremsgewichtsmesswerts addiert werden. Der jeweils ermittelte Bremsgewichtsmesswert wird als Ausfallzustandsmesswert Gb in dem Speicher 22 abgespeichert.

Die Fahrzeugmassebestimmungseinrichtung 30 steht vorzugsweise mit einer Luftfederung 31 des Schienenfahrzeugs 10 in Verbindung und bestimmt anhand eines den Luftdruck in der Luftfederung 31 angebenden Luftdruckmesswerts L die Fahrzeugmasse des Schienenfahrzeugs 10 in Form eines Massewerts M. Der Massewert M gelangt von der Fahrzeugmassebestimmungseinrichtung 30 zu dem Bremssteuergerät 20 und stellt neben dem Ausfallzustandsmesswert Gb einen weiteren Messwert dar, der von dem Bremssteuergerät 20 verarbeitet wird.

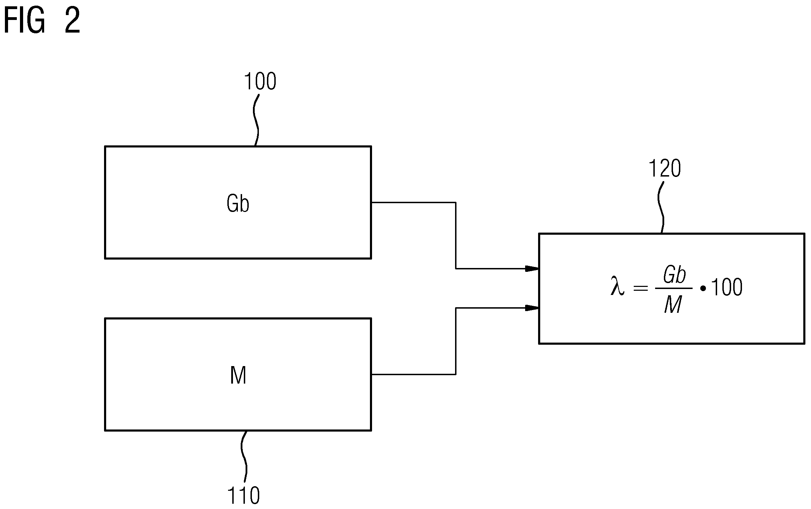

Führt die Steuereinrichtung 21 das Softwareprogrammmodul SP1 aus, so kann sie mit dem Massewert M und dem Ausfallzustandsmesswert Gb einen Bremsvermögenswert $\lambda$ in Form eines Bremshundertstellwertes errechnen. Dies soll im Zusammenhang mit der Figur 2 verdeutlicht werden.

Die Figur 2 zeigt in Form eines Blockschaltbildes die Arbeitsweise des Softwareprogrammmoduls SP1. In einem Schritt 100 liest die Steuereinrichtung 21 den Ausfallzustandsmesswert Gb aus dem Speicher 22 aus. In einem Schritt 110 empfängt sie den Massewert M von der Fahrzeugmassebestimmungseinrichtung 30.

In einem Schritt 120 errechnet die Steuereinrichtung 21 den Bremsvermögenswert λ gemäß

$$\lambda = \frac{Gb}{M} \cdot 100$$

Der aktuelle Bremsvermögenswert λ berücksichtigt bei dem Ausführungsbeispiel gemäß den Figuren 1 und 2 somit zwei Messwerte, nämlich den Ausfallzustandsmesswert Gb und den Massewert M.

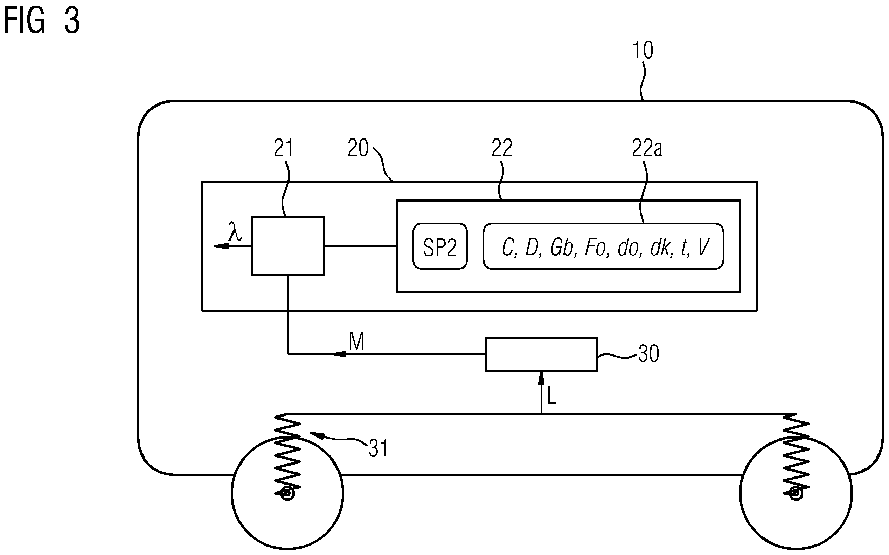

Die Figur 3 zeigt ein Ausführungsbeispiel für ein Schienenfahrzeug 10, das mit einer anderen Ausgestaltung für das Bremssteuergerät 20 ausgestattet ist. Bei dem Bremssteuergerät 20 gemäß Figur 3 sind in dem Speicher 22 neben einem Softwareprogrammmodul SP2

- der Ausfallzustandsmesswert Gb,
- die Bremskraft Fo der Bremsen im Neuzustand des Schienenfahrzeugs 10,
- der Raddurchmesser do der Räder im Neuzustand des Schienenfahrzeugs 10,
- ein aktueller Raddurchmessermesswert dk, der den aktuellen Raddurchmesser der Räder des Schienenfahrzeugs 10 angibt,
- die Ansprechzeit t der Bremsen,
- der Fahrwiderstand Ff des Schienenfahrzeugs 10,
- eine vorgegebene Ausgangsgeschwindigkeit V sowie
- zwei fest vorgegebene Konstanten C und D gespeichert.

Die Konstanten C und D werden in Abhängigkeit vom Bremssystem bestimmt und können beispielsweise in Abhängigkeit von der Bremsausgangsgeschwindigkeit die unten genannte Werte aufweisen:

| v[km/h] | C | D |
|---|---|---|
| 100 | 61 300 | 8,9 |
| 120 | 91 633 | 11,6 |
| 140 | 130 995 | 11,6 |
| 150 | 152 640 | 11,6 |
| 160 | 176 714 | 11,6 |
| 180 | 228 219 | 11,6 |
| 200 | 287 620 | 11,6 |

Die Ausgangsgeschwindigkeit V kann beispielsweise als 120 km/h oder 140 km/h vorgegeben sein.

Der aktuelle Raddurchmessermesswert dk kann mit Messgeräten während einer Fahrzeugwartung oder Fahrzeuginspektion gemessen werden und im Speicher 22 abgespeichert werden. Alternativ kann der aktuelle Raddurchmessermesswert dk während der Fahrt des Schienenfahrzeugs 10 gemessen werden, beispielsweise durch Messen der Anzahl der Radumdrehungen bei einer Fahrt entlang einer Strecke, deren Länge bekannt ist.

Auch kann der Raddurchmessermesswert dk beispielsweise durch eine Messeinrichtung bestimmt werden, bei der die Geschwindigkeit unabhängig vom Raddurchmesser (z.B. Radar) bestimmt wird und parallel dazu die Raddrehzahl erfasst wird.

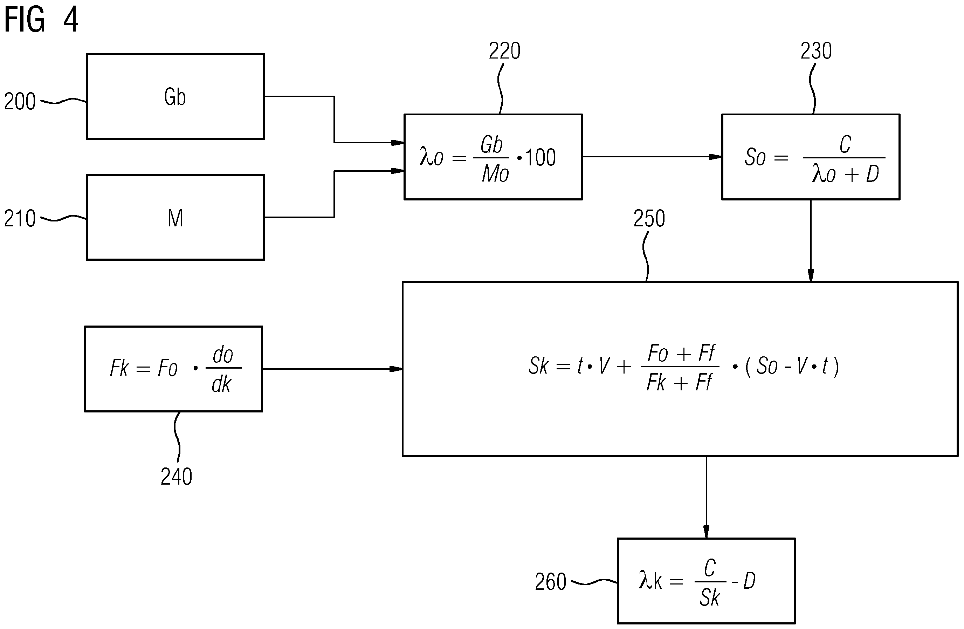

Führt die Steuereinrichtung 21 das Softwareprogrammmodul SP2 aus, so kann sie mit dem Massewert M, dem Ausfallzustandsmesswert Gb und dem aktuellen Raddurchmessermesswert dk den aktuellen Bremsvermögenswert λ errechnen. Dies soll im Zusammenhang mit der Figur 4 erläutert werden.

Die Figur 4 zeigt in Form eines Blockschaltbildes die Arbeitsweise des Softwareprogrammmoduls SP2. In einem Schritt 200 liest die Steuereinrichtung 21 den Ausfallzustandsmesswert Gb aus dem Speicher 22 aus. In einem Schritt 210 empfängt sie den Massewert M von der Fahrzeugmassebestimmungseinrichtung 30.

In einem Schritt 220 errechnet die Steuereinrichtung 21 einen vorläufigen Bremsvermögenswert λo gemäß

$$\lambda o = \frac{Gb}{Mo} \cdot 100$$

Anschließend ermittelt die Steuereinrichtung 21 in einem Schritt 230 einen vorläufigen Bremsweg So gemäß:

$$So = \frac{C}{\lambda o + D}$$

In einem Schritt 240 ermittelt die Steuereinrichtung 21 außerdem einen aktuellen Bremskraftwert Fk, der die Bremskraft im aktuellen Fahrzeugzustand angibt, und zwar vorzugsweise gemäß:

$$Fk = Fo \cdot \frac{do}{dk}$$

Mit dem aktuellen Bremskraftwert Fk wird in einem Schritt 250 der vorläufige Bremsweg So korrigiert und ein aktueller Bremsweg Sk ermittelt, vorzugsweise gemäß

$$Sk = t \cdot V + \frac{Fo + Ff}{Fk + Ff} \cdot (So - V \cdot t)$$

Mit dem aktuellen Bremsweg Sk wird die Steuereinrichtung 21 in einem Schritt 260 den aktuellen Bremsvermögenswert λ errechnen, vorzugsweise gemäß:

$$\lambda = \frac{C}{Sk} - D$$

Der aktuelle Bremsvermögenswert λ berücksichtigt bei dem Ausführungsbeispiel gemäß den Figuren 3 und 4 somit drei Messwerte, nämlich den Ausfallzustandsmesswert Gb, den Massewert M und den Raddurchmessermesswert dk.

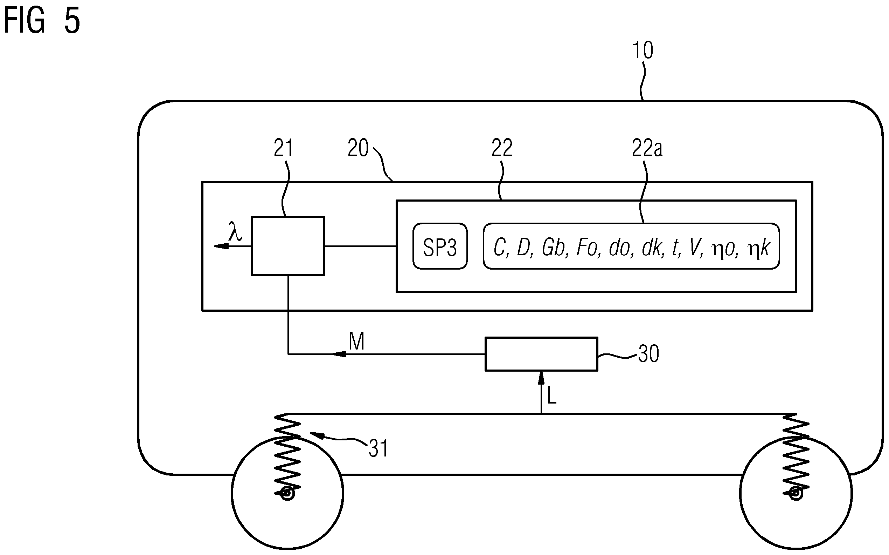

Die Figur 5 zeigt ein Ausführungsbeispiel für ein Schienenfahrzeug 10, das mit einer dritten Ausgestaltungsvariante für das Bremssteuergerät 20 ausgestattet ist. Bei dem Bremssteuergerät 20 gemäß Figur 5 sind in dem Speicher 22 neben einem Softwareprogrammmodul SP3

- der Ausfallzustandsmesswert Gb,
- die Bremskraft Fo der Bremsen im Neuzustand des Schienenfahrzeugs 10,
- der Raddurchmesser do der Räder im Neuzustand des Schienenfahrzeugs 10,
- ein aktueller Raddurchmessermesswert dk, der den aktuellen Raddurchmesser der Räder des Schienenfahrzeugs 10 angibt,
- ein Gestängewirkungsgrad ηo im schlechtesten zu erwartenden Betriebszustand des Schienenfahrzeugs 10,
- ein Gestängewirkungsgradmesswert ηk, der den aktuellen Gestängewirkungsgrad des Schienenfahrzeugs 10 angibt,
- die Ansprechzeit t der Bremsen,
- der Fahrwiderstand Ff des Schienenfahrzeugs 10,
- eine vorgegebene Ausgangsgeschwindigkeit V sowie zwei fest vorgegebene Konstanten C und D gespeichert.

Die Konstanten C und D können beispielsweise die oben aufgeführten Werte aufweisen.

Die Ausgangsgeschwindigkeit V kann beispielsweise als 120 km/h oder 140 km/h vorgegeben werden bzw. vorgegeben sein.

Der aktuelle Raddurchmessermesswert dk kann mit Messgeräten während einer Fahrzeugwartung oder Fahrzeuginspektion gemessen werden und im Speicher 22 abgespeichert werden. Alternativ kann der aktuelle Raddurchmessermesswert dk während der Fahrt des Schienenfahrzeugs 10 gemessen werden, beispielsweise durch Messen der Radumdrehungen bei einer Fahrt entlang einer Strecke, deren Länge bekannt ist.

Der aktuelle Gestängewirkungsgradmesswert ηk wird vorzugsweise mit Messgeräten während einer Fahrzeugwartung oder Fahrzeuginspektion gemessen und im Speicher 22 abgespeichert. Alternativ kann der aktuelle Gestängewirkungsgradmesswert ηk auch während der Fahrt des Schienenfahrzeugs 10 gemessen werden.

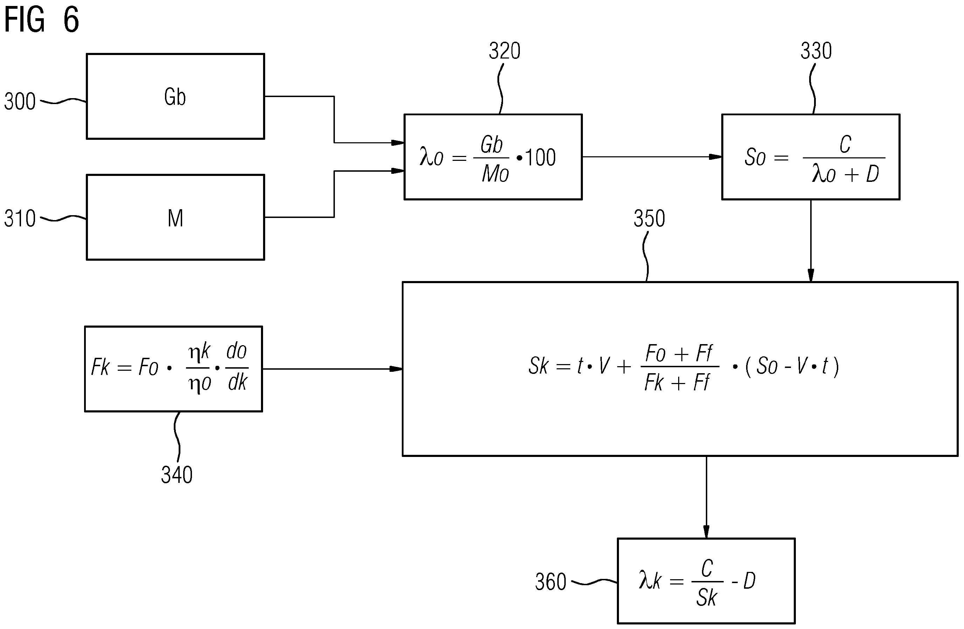

Führt die Steuereinrichtung 21 das Softwareprogrammmodul SP3 aus, so kann sie mit dem Massewert M, dem Ausfallzustandsmesswert Gb, dem aktuellen Gestängewirkungsgradmesswert ηk und dem aktuellen Raddurchmessermesswert dk den aktuellen Bremsvermögenswert λ errechnen. Dies soll im Zusammenhang mit der Figur 6 erläutert werden.

Die Figur 6 zeigt in Form eines Blockschaltbildes die Arbeitsweise des Softwareprogrammmoduls SP3. In einem Schritt 300 liest die Steuereinrichtung 21 den Ausfallzustandsmesswert Gb aus dem Speicher 22 aus. In einem Schritt 310 empfängt sie den Massewert M von der Fahrzeugmassebestimmungseinrichtung 30.

In einem Schritt 320 errechnet die Steuereinrichtung 21 einen vorläufigen Bremsvermögenswert λo gemäß

$$\lambda o = \frac{Gb}{M} \cdot 100$$

Anschließend ermittelt die Steuereinrichtung 21 in einem Schritt 330 einen vorläufigen Bremsweg So gemäß:

$$So = \frac{C}{\lambda o + D}$$

In einem Schritt 340 ermittelt die Steuereinrichtung 21 außerdem einen aktuellen Bremskraftwert Fk, der die Bremskraft im aktuellen Fahrzeugzustand angibt, und zwar vorzugsweise gemäß:

$$Fk = Fo \cdot \frac{\eta k}{\eta o} \cdot \frac{do}{dk}$$

Mit dem aktuellen Bremskraftwert Fk wird in einem Schritt 350 der vorläufige Bremsweg So korrigiert und ein aktueller Bremsweg Sk ermittelt, vorzugsweise gemäß

$$Sk = t \cdot V + \frac{Fo + Ff}{Fk + Ff} \cdot (So - V \cdot t)$$

Mit dem aktuellen Bremsweg Sk wird die Steuereinrichtung 21 in einem Schritt 360 den aktuellen Bremsvermögenswert λ errechnen, vorzugsweise gemäß:

$$\lambda = \frac{C}{Sk} - D$$

Der aktuelle Bremsvermögenswert $\lambda$ berücksichtigt bei dem Ausführungsbeispiel gemäß den Figuren 5 und 6 somit vier aktuelle Messwerte, nämlich den Ausfallzustandsmesswert Gb, den Massewert M, den aktuellen Gestängewirkungsgradmesswert $\eta$k und den Raddurchmessermesswert dk.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Betreiben eines Fahrzeugs, insbesondere eines Schienenfahrzeugs (10), wobei bei dem Verfahren

    - ein den jeweiligen aktuellen Ausfallszustand der Bremsen angebender Ausfallzustandsmesswert (Gb) ermittelt wird und
    - ein das Bremsvermögen der Bremsen des Fahrzeugs angebender Bremsvermögenswert ($\lambda$) ermittelt wird,
    **dadurch gekennzeichnet, dass**
    - als der Bremsvermögenswert ($\lambda$) ein Bremshundertstelwert ermittelt wird und
    - bei der Berechnung des Bremsvermögenswerts ($\lambda$) in Form des Bremshundertstelwertes der Ausfallzustandsmesswert (Gb) und mindestens ein weiterer Messwert, der den Zustand des Fahrzeugs oder den Zustand einer Fahrzeugkomponente des Fahrzeugs angibt, herangezogen wird.

2. Verfahren nach Anspruch 1,
    **dadurch gekennzeichnet, dass**

    - mit dem Ausfallzustandsmesswert (Gb) zunächst ein vorläufiger Bremsvermögenswert ($\lambda$o) ermittelt wird,
    - mit dem vorläufigen Bremsvermögenswert ein vorläufiger Bremsweg (So) ermittelt wird,
    - der vorläufige Bremsweg (So) mit dem weiteren Messwert oder mit zumindest einem der weiteren Messwerte unter Bildung eines korrigierten Bremswegs (Sk) korrigiert wird und
    - ein das Bremsvermögen der Bremsen des Fahrzeugs angebender endgültiger Bremsvermögenswert ($\lambda$) unter Heranziehung des korrigierten Bremswegs (Sk) errechnet wird.

3. Verfahren nach einem der voranstehenden Ansprüche,
    **dadurch gekennzeichnet, dass**

    - die jeweilige Fahrzeugmasse gemessen wird und als der weitere Messwert oder einer der weiteren Messwerte ein Massemesswert (M) ermittelt wird und
    - der Bremsvermögenswert ($\lambda$) zumindest auch in Abhängigkeit von dem Massemesswert (M) bestimmt wird.

4. Verfahren nach Anspruch 3,
    **dadurch gekennzeichnet, dass**
    die Fahrzeugmasse während des Fahrbetriebs gemessen wird, insbesondere indem der Luftdruck in der Luftfederung (31) des Fahrzeugs gemessen wird und mit dem Luftdruckmesswert (L) der Massemesswert (M) gebildet wird.

5. Verfahren nach einem der voranstehenden Ansprüche,
    **dadurch gekennzeichnet, dass**

    - der Raddurchmesser eines oder mehrerer Räder des Fahrzeugs gemessen und als der weitere Messwert oder einer der weiteren Messwerte ein Raddurchmessermesswert (dk) ermittelt wird und
    - der Bremsvermögenswert ($\lambda$) zumindest auch in Abhängigkeit von dem Raddurchmessermesswert (dk) bestimmt wird.

6. Verfahren nach Anspruch 5,
    **dadurch gekennzeichnet, dass** der Raddurchmesser im Rahmen einer Fahrzeugwartung oder Fahrzeuginspektion gemessen wird und der Raddurchmessermesswert (dk) in einem Speicher (22) des Fahrzeugs, insbesondere einem Speicher eines Steuergeräts (20) des Fahrzeugs, abgespeichert wird.

7. Verfahren nach einem der voranstehenden Ansprüche,
    **dadurch gekennzeichnet, dass**

    - der Gestängewirkungsgrad der Bremsen gemessen und als der weitere Messwert oder einer der weiteren Messwerte ein Gestängewirkungsgradmesswert ($\eta$k) gebildet wird und
    - der Bremsvermögenswert ($\lambda$) zumindest auch in Abhängigkeit von dem Gestängewirkungsgradmesswert ($\eta$k) bestimmt wird.

8. Verfahren nach Anspruch 7,
    **dadurch gekennzeichnet, dass**
    der Gestängewirkungsgrad im Rahmen einer Fahrzeugwartung oder Fahrzeuginspektion gemessen wird und der Gestängewirkungsgradmesswert in einem Speicher des Fahrzeugs, insbesondere einem Speicher eines Steuergeräts des Fahrzeugs, abgespeichert wird.

9. Verfahren nach einem der voranstehenden Ansprüche,
**dadurch gekennzeichnet, dass**

- im Falle eines Bremsvorgangs die Steuerung der Bremsen unter Berücksichtigung des berechneten Bremsvermögenswerts ($\lambda$) erfolgt und/oder
- die Ermittelung der zulässigen Höchstgeschwindigkeit des Fahrzeugs - abhängig vom jeweiligen Streckenabschnitt oder unabhängig vom jeweiligen Streckenabschnitt - unter Berücksichtigung des errechneten Bremsvermögenswerts ($\lambda$) erfolgt.

10. Verfahren nach einem der voranstehenden Ansprüche,
**dadurch gekennzeichnet, dass**

- mit dem Ausfallzustandsmesswert (Gb) zunächst ein vorläufiger Bremsvermögenswert ($\lambda$o) ermittelt wird,
- mit dem vorläufigen Bremsvermögenswert ein vorläufiger Bremsweg (So) ermittelt wird,
- der vorläufige Bremsvermögenswert ($\lambda$o) mit dem weiteren Messwert oder mit zumindest einem der weiteren Messwerte unter Bildung eines korrigierten Bremswegs (Sk) korrigiert wird und
- der das Bremsvermögen der Bremsen des Fahrzeugs angebende endgültige Bremsvermögenswert ($\lambda$) unter Heranziehung des korrigierten Bremswegs (Sk) errechnet wird.

11. Steuergerät (20) für ein Fahrzeug, insbesondere ein Schienenfahrzeug (10), wobei das Steuergerät (20) geeignet ist, den jeweiligen Ausfallzustand der Bremsen zu ermitteln, einen den jeweiligen aktuellen Ausfallzustand der Bremsen angebenden Ausfallzustandsmesswert (Gb) zu ermitteln und einen Bremsvermögenswert ($\lambda$) der Bremsen des Fahrzeugs zu ermitteln,
**dadurch gekennzeichnet, dass**

- das Steuergerät (20) derart ausgestaltet ist, dass es als Bremsvermögenswert ($\lambda$) einen Bremshundertstelwert ermittelt und bei der Berechnung des Bremsvermögenswertes ($\lambda$) in Form des Bremshundertstelwertes den Ausfallzustandsmesswert (Gb) und mindestens einen weiteren Messwert berücksichtigt, der den Zustand des Fahrzeugs oder einer Fahrzeugkomponente des Fahrzeugs angibt.

12. Steuergerät nach Anspruch 11,
**dadurch gekennzeichnet, dass**

- das Steuergerät (20) einen Speicher (22) aufweist, in dem ein im Rahmen einer Fahrzeugwartung, Fahrzeuginspektion oder des normalen Fahrzeugbetriebs gemessener Raddurchmessermesswert (dk) und/oder ein im Rahmen einer Fahrzeugwartung, Fahrzeuginspektion oder des normalen Fahrzeugbetriebs gemessener Gestängewirkungsgradmesswert ($\eta$k) abgespeichert oder abspeicherbar ist, und
- das Steuergerät derart ausgestaltet ist, dass es den Bremsvermögenswert ($\lambda$) in Abhängigkeit von dem Raddurchmessermesswert (dk) und/oder dem Gestängewirkungsgradmesswert ($\eta$k) bestimmt.

13. Steuergerät nach einem der voranstehenden Ansprüche 11-12,
**dadurch gekennzeichnet, dass**

- das Steuergerät (20) mit einer Fahrzeugmassebestimmungseinrichtung (30) verbunden ist oder eine solche selbst umfasst, die die jeweilige Fahrzeugmasse messen und als weiteren Messwert einen Massemesswert (M) ermitteln kann, und
- das Steuergerät (20) derart ausgestaltet ist, dass es den Bremsvermögenswert ($\lambda$) in Abhängigkeit von dem aktuellen Massemesswert (M) bestimmt.

14. Steuergerät nach einem der voranstehenden Ansprüche 11-13,
**dadurch gekennzeichnet, dass**
die Fahrzeugmassebestimmungseinrichtung den Luftdruck in der Luftfederung des Fahrzeugs messen und mit dem Luftdruckmesswert (L) den Massemesswert (M) bilden kann.

**Claims**

1. Method for operating a vehicle, in particular a rail vehicle (10), wherein in the method

- a failure state measurement value (Gb) which indicates the respective current failure state of the brakes is ascertained and
- a stopping power value ($\lambda$) which indicates the stopping power of the brakes of the vehicle is ascertained,
**characterised in that**
- a braking percentage value is ascertained as the stopping power value ($\lambda$) and
- when calculating the stopping power value ($\lambda$) in the form of the braking percentage value, use is made of the failure state measurement value (Gb) and at least one further measurement value, which indicates the state of the vehicle or the state of a vehicle component of the vehicle.

2. Method according to claim 1, **characterised in that**

- a preliminary stopping power value ($\lambda$o) is initially ascertained using the failure state measurement value (Gb),
- a preliminary braking distance (So) is ascertained using the preliminary stopping power value,
- the preliminary braking distance (So) is corrected using the further measurement value or using at least one of the further measurement values to form a corrected braking distance (Sk) and
- a final stopping power value ($\lambda$) which indicates the stopping power of the brakes of the vehicle is calculated while making use of the corrected braking distance (Sk).

3. Method according to one of the preceding claims, **characterised in that**

- the respective vehicle mass is measured and a mass measurement value (M) is ascertained as the further measurement value or one of the further measurement values and
- the stopping power value ($\lambda$) is at least also determined as a function of the mass measurement value (M).

4. Method according to claim 3, **characterised in that**
the vehicle mass is measured during travel operation, in particular by the air pressure in the pneumatic suspension (31) of the vehicle being measured and the mass measurement value (M) being formed using the air pressure measurement value (L).

5. Method according to one of the preceding claims, **characterised in that**

- the wheel diameter of one or more wheels of the vehicle is measured and a wheel diameter measurement value (dk) is ascertained as the further measurement value or one of the further measurement values and
- the stopping power value ($\lambda$) is at least also determined as a function of the wheel diameter measurement value (dk).

6. Method according to claim 5, **characterised in that**
the wheel diameter is measured as part of a vehicle maintenance or vehicle inspection and the wheel diameter measurement value (dk) is stored in a memory (22) of the vehicle, in particular a memory of a control device (20) of the vehicle.

7. Method according to one of the preceding claims, **characterised in that**

- the linkage efficiency of the brakes is measured and a linkage efficiency measurement value ($\eta$k) is formed as the further measurement value or one of the further measurement values and
- the stopping power value ($\lambda$) is at least also determined as a function of the linkage efficiency measurement value ($\eta$k) .

8. Method according to claim 7, **characterised in that**
the linkage efficiency is measured as part of a vehicle maintenance or vehicle inspection and the linkage efficiency measurement value is stored in a memory of the vehicle, in particular a memory of a control device of the vehicle.

9. Method according to one of the preceding claims, **characterised in that**

- in the event of a braking procedure, the brakes are controlled while taking into consideration the calculated stopping power value ($\lambda$) and/or
- the permissible maximum speed of the vehicle
- depending on the respective track section or regardless of the respective track section - is ascertained while taking into consideration the calculated stopping power value ($\lambda$).

10. Method according to one of the preceding claims, **characterised in that**

- a preliminary stopping power value ($\lambda$o) is initially ascertained using the failure state measurement value (Gb),
- a preliminary braking distance (So) is ascertained using the preliminary stopping power value,
- the preliminary stopping power value ($\lambda$o) is corrected using the further measurement value or using at least one of the further measurement values to form a corrected braking distance (Sk) and
- a final stopping power value ($\lambda$) which indicates the stopping power of the brakes of the vehicle is calculated while making use of the corrected braking distance (Sk).

11. Control device (20) for a vehicle, in particular a rail vehicle (10), wherein the control device (20) is suitable for ascertaining the respective failure state of the brakes, ascertaining a failure state measurement value (Gb) which indicates the respective current failure state of the brakes and ascertaining a stopping power value (λ) of the brakes of the vehicle, **characterised in that**

- the control device (20) is embodied such that it ascertains a braking percentage value as the stopping power value (λ) and takes the failure state measurement value (Gb) and at least one further measurement value, which indicates the state of the vehicle or of a vehicle component, into consideration when calculating the stopping power value (λ) in the form of the braking percentage value.

**12.** Control device according to claim 11, **characterised in that**

- the control device (20) has a memory (22), in which a wheel diameter measurement value (dk) measured as part of a vehicle maintenance, vehicle inspection or the normal vehicle operation and/or a linkage efficiency measurement value (ηk) measured as part of a vehicle maintenance, vehicle inspection or the normal vehicle operation is stored or is able to be stored, and
- the control device is embodied such that it determines the stopping power value (λ) as a function of the wheel diameter measurement value (dk) and/or the linkage efficiency measurement value (ηk),

**13.** Control device according to one of the preceding claims 11-12, **characterised in that**

- the control device (20) is connected to a vehicle mass determining facility (30) or itself comprises such a facility, which is able to measure the respective vehicle mass and ascertain a mass measurement value (M) as a further measurement value, and
- the control device (20) is embodied such that it determines the stopping power value (λ) as a function of the current mass measurement value (M).

**14.** Control device according to one of the preceding claims 11-13, **characterised in that** the vehicle mass determining facility is able to measure the air pressure in the pneumatic suspension of the vehicle and form the mass measurement value (M) using the air pressure measurement value (L).

**Revendications**

**1.** Procédé pour faire fonctionner un véhicule, notamment un véhicule (10) ferroviaire, procédé dans lequel

- on détermine une valeur (Gb) de mesure de l'état de raté indiquant l'état de raté en cours respectif des freins et
- on détermine une valeur (λ) de pouvoir de freinage indiquant le pouvoir de freinage des freins du véhicule, **caractérisé en ce que**
- on détermine, comme valeur (λ) de pouvoir de freinage, une valeur du centième de freinage et
- dans le calcul de la valeur (λ) de pouvoir de freinage, sous la forme de la valeur du centième de freinage, on tire parti de la valeur (Gb) de mesure de l'état de raté et d'au moins une autre valeur de mesure, qui indique l'état du véhicule ou l'état d'un élément du véhicule.

**2.** Procédé suivant la revendication 1, **caractérisé en ce que**

- on détermine, par la valeur (Gb) d'état de raté, d'abord une valeur (λo) de pouvoir de freinage provisoire,
- on détermine, par la valeur de pouvoir de freinage provisoire, un trajet (So) de frein provisoire,
- on corrige le trajet (So) de freinage provisoire par l'autre valeur de mesure ou par au moins l'une des autres valeurs de mesure, en formant un trajet (Sk) de freinage corrigé et
- on calcule une valeur (λ) de pouvoir de freinage final indiquant le pouvoir de freinage des freins du véhicule, en tirant parti du trajet (Sk) de freinage corrigé.

**3.** Procédé suivant l'une des revendications précédentes, **caractérisé en ce que**

- on mesure la masse du véhicule et on détermine, comme autre valeur de mesure ou comme l'une des autres valeurs de mesure, une valeur (M) de mesure de masse et
- on détermine la valeur (λ) de pouvoir de freinage au moins également en fonction de la valeur (M) de mesure de la masse.

**4.** Procédé suivant la revendication 3, **caractérisé en ce que** l'on mesure la masse du véhicule pendant la marche, notamment en mesurant la pression de l'air dans la suspension (31) pneumatique du véhicule et on forme la valeur (M) de mesure de la masse par la valeur (L) de mesure de la pression de l'air.

**5.** Procédé suivant l'une des revendications précédentes,
**caractérisé en ce que**

- on mesure le diamètre de roue d'une roue ou de plusieurs roues du véhicule et on détermine, comme autre valeur de mesure ou comme l'une des autres valeurs de mesure, une valeur (dk) de mesure du diamètre de la roue et
- on détermine la valeur ($\lambda$) de pouvoir de freinage au moins également en fonction de la valeur (dk) de mesure du diamètre de la roue.

**6.** Procédé suivant la revendication 5,
**caractérisé en ce que**
l'on mesure le diamètre de roue dans le cadre d'un entretien du véhicule ou d'une inspection du véhicule et on met la valeur (dk) de mesure du diamètre de la roue dans une mémoire (22) du véhicule, notamment dans une mémoire d'un appareil (20) de commande du véhicule.

**7.** Procédé suivant l'une des revendications précédentes,
**caractérisé en ce que**

- on mesure le rendement de la timonerie des freins et on forme, comme autre valeur de mesure ou comme l'une des autres valeurs de mesure, une valeur ($\eta$k) de mesure du rendement de la timonerie et
- on détermine la valeur ($\lambda$) de pouvoir de freinage au moins également en fonction de la valeur ($\eta$k) de mesure du rendement de la timonerie.

**8.** Procédé suivant la revendication 7,
**caractérisé en ce que**
l'on mesure le rendement de la timonerie dans le cadre d'un entretien du véhicule ou d'une inspection du véhicule et on met la valeur du rendement de la timonerie dans une mémoire du véhicule, notamment dans une mémoire de l'appareil de commande du véhicule.

**9.** Procédé suivant l'une des revendications précédentes,
**caractérisé en ce que**

- dans le cas d'un freinage, la commande des freins s'effectue en tenant compte de la valeur ($\lambda$) de pouvoir de freinage, qui a été calculée et/ou
- la détermination de la vitesse la plus grande admissible du véhicule - s'effectue en fonction du tronçon de voie ou indépendamment du tronçon de voie - en tenant compte de la valeur ($\lambda$) de pouvoir de freinage, qui a été calculée.

**10.** Procédé suivant l'une des revendications précédentes,
**caractérisé en ce que**

- on détermine, par la valeur (Gb) de mesure de l'état de raté, d'abord une valeur ($\lambda$o) de pouvoir de freinage provisoire,
- on détermine, par la valeur de pouvoir de freinage provisoire, un trajet (So) de freinage provisoire,
- on corrige la valeur ($\lambda$o) de pouvoir de freinage provisoire par l'autre valeur de mesure ou par au moins l'une des autres valeurs de mesure, en formant un trajet (Sk) de freinage corrigé et
- on calcule la valeur ($\lambda$) de pouvoir de freinage finale, indiquant le pouvoir de freinage des freins du véhicule, en tirant parti du trajet (Sk) de freinage corrigé.

**11.** Appareil (20) de commande d'un véhicule, notamment d'un véhicule (10) ferroviaire, l'appareil (20) de commande étant propre à déterminer l'état de raté respectif des freins, à déterminer une valeur (Gb) d'état de raté, indiquant l'état de raté en cours respectif des freins et à déterminer une valeur ($\lambda$) de pouvoir de freinage des freins du véhicule,
**caractérisé en ce que**
l'appareil (20) de commande est conformé de manière à déterminer, comme valeur ($\lambda$) de pouvoir de freinage, une valeur du centième de freinage et, dans le calcul de la valeur ($\lambda$) du pouvoir de freinage, sous la forme de la valeur du centième de freinage, à tenir compte de la valeur (Gb) de mesure de l'état de raté et d'au moins une autre valeur de mesure, qui indique l'état du véhicule ou d'un élément du véhicule.

**12.** Appareil de commande suivant la revendication 11,
**caractérisé en ce que**

- l'appareil (20) de commande a une mémoire (22), dans laquelle est mise en mémoire ou peut l'être une valeur (dk) de mesure de diamètre de roue mesurée dans le cadre d'un entretien du véhicule, d'une inspection du véhicule ou du fonctionnement normal du véhicule et/ou une valeur ($\eta$k) de rendement de la timonerie, mesurée dans le cadre d'un entretien du véhicule, d'une inspection du véhicule ou du fonctionnement normal du véhicule et
- l'appareil de commande est conformé pour déterminer la valeur ($\lambda$) de pouvoir de freinage en fonction de la valeur (dk) de mesure du diamètre de la roue et/ou de la valeur ($\eta$k) de rendement de la timonerie.

**13.** Appareil de commande suivant l'une des revendications 11 à 12 précédentes,

**caractérisé en ce que**

- l'appareil (20) de commande est relié à un dispositif (30) de détermination de la masse du véhicule ou en comprend soi-même un, qui peut mesurer la masse du véhicule ou qui peut déterminer, comme autre valeur de mesure, une valeur (M) de mesure de la masse, et
- l'appareil (20) de commande est conformé de manière à déterminer la valeur (λ) de pouvoir de freinage en fonction de la valeur (M) de mesure de la masse en cours.

14. Appareil de commande suivant l'une des revendications 11 à 13 précédentes,
**caractérisé en ce que**
le dispositif de détermination de la masse du véhicule peut mesurer la pression de l'air dans la suspension pneumatique du véhicule et former la valeur (M) de mesure de la masse par la valeur (L) de mesure de la pression de l'air.

FIG 1

EP 3 089 895 B1

FIG 2

$$\lambda = \frac{Gb}{M} \cdot 100$$

FIG 3

**FIG 4**

200 — Gb

210 — M

220 — $\lambda_0 = \dfrac{Gb}{Mo} \cdot 100$

230 — $S_o = \dfrac{C}{\lambda_o + D}$

240 — $Fk = F_o \cdot \dfrac{do}{dk}$

250 — $Sk = t \cdot V + \dfrac{Fo + Ff}{Fk + Ff} \cdot (S_o - V \cdot t)$

260 — $\lambda k = \dfrac{C}{Sk} - D$

FIG 5

SP3   C, D, Gb, Fo, do, dk, t, V, η0, ηk

10   22a   22   20   21   30   31   M   L   λ

## FIG 6

$$\lambda_o = \frac{Gb}{Mo} \cdot 100$$

$$So = \frac{C}{\lambda_o + D}$$

$$Fk = Fo \cdot \frac{\eta_k}{\eta_o} \cdot \frac{do}{dk}$$

$$Sk = t \cdot V + \frac{Fo + Ff}{Fk + Ff} \cdot (So - V \cdot t)$$

$$\lambda_k = \frac{C}{Sk} - D$$

EP 3 089 895 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10233845 A1
- WO 2004033266 A1
- DE 102007024310 A1
- EP 1387153 A1
- DE 102006011963 B3